# EUROPEAN PATENT APPLICATION

(11) **EP 4 510 498 A1**
(43) Date of publication of application: **19.02.2025**
(21) Application number: 23191921.8
(22) Date of filing: 17.08.2023
(51) Int. Cl.: H04L 9/08

(54) **INITIAL LATENCY REDUCTION IN QUANTUM KEY DISTRIBUTION**

(71) Applicant: ID Quantique SA, 1227 Carouge (CH)
(72) Inventor: VULLIEZ, Cédric, 1217 Meyrin (CH)
(74) Representative: KATZAROV S.A.

(57) **Abstract**

The present invention relates to a QKD communication method between an emitter and a receiver comprising the steps of distilling a secret key through a Privacy Amplification characterized in that the PA size is variable so as to ramp up from a first lower value to an end greater value.

## Description

### Technical Field

The present invention relates to a method and a device adapted to rapidly generate keys upon start of the device, and more particularly to a method and a device increasing the security of the quantum keys generated and thus, the keyrate, without impacting the initial latency of the first quantum keys for the user.

### Background of the invention

Quantum cryptography or quantum key distribution, in the following also referred to as QKD, is a method allowing the distribution of a secret key between two distant parties, the emitter and the receiver, with a provable absolute security. Quantum key distribution relies on quantum physics principles and encoding information in quantum states, or qubits, as opposed to classical communication's use of bits. Usually, photons are used for these quantum states. Quantum key distribution exploits certain properties of these quantum states to ensure its security.

More particularly, the security of this method comes from the fact that the measurement of a quantum state of an unknown quantum system modifies the system itself. In other words, a spy eavesdropping on a quantum communication channel cannot get information on the key without introducing errors in the key exchanged between the emitter and the receiver thereby informing the user of an eavesdropping attempt.

The encryption devices enable secure transmission of useful payload by performing some kind of symmetric encryption using the keys exchanged by quantum key distribution. Specific quantum key distribution systems are described for instance in US 5,307,410, and in the article by C. H. Bennett entitled "Quantum cryptography using any two non-orthogonal states", Phys. Rev. Lett. 68, 3121 (1992).

The QKD systems carry out privacy amplification (PA), where PA is a process that allows two parties to distil a secret key from a common random variable of which an eavesdropper has partial information. These QKD systems, when carrying out privacy amplification, are affected by two types of latency, namely the Privacy amplification filling latency which is the time it takes to accumulate enough detections to complete the privacy amplification step and the privacy amplification processing latency which is the time between the last detection needed for the computation and the end of the computation.

The prior art mainly focuses on the processing latency, trying to make that time tend to zero by doing calculations that can already be done while waiting for more detections.

Also, so far, the prior art has been focused on increasing the privacy amplification efficiency and speed. In fact, there have been several attempts to prevent limiting the PA by the processing time for a block, and finishing the PA before the next block is ready.

To be clear the secret key distillations, i.e., the Privacy Amplifications, are done with a specific data set size, which will be called PA size below, big or small and the "block size" is the desired amount of Data needed to make the PA computation.

On the other hand, the block latency is defined by the PA size and the detections per second. Those are the only two factors that may reduce such kind of latency.

For a long-range system with low detection counts, the PA processing speed is quite insignificant compared to the accumulation time. Therefore, the only way to speed up the first delivered quantum keys is to reduce the PA size.

To give few examples, a PA size of 1M is enough to have a decent security and isn't too big for the detectors speed. In case the QKD system has 5k to 10k detections per second (determined by the detector rate of the receiver), it takes around 2 minutes for a block. Other QKD systems may require 3 seconds for a block, or a couple of minutes at very high attenuation.

In the above-mentioned cases, speeding up the latency is not necessary. However, if the PA size is increased by 10, then a couple minutes can turn into hours for generating the first key. In a more general situation of a low detection count system, not limited to the attenuation or the detectors performance, a normal PA size of 1M would be in the 20 minutes range, and thus, increasing the PA size by 10 would increase the time by 10, making it 200 minutes.

Hence, increasing the PA size to have a better performance in terms of key rates has a significant impact on the latency, lowering the user experience.

In the QKD, finite key analysis will give a certain security of the block depending on the PA size. By security we mean the portion of the keys in the privacy amplification block that we will keep - i.e., the compression ratio of the PA.

Usually, a Toeplitz matrix or Fast Fourier Transformation is used to execute the Privacy Amplification step. For instance, the Toeplitz matrix has a fixed size which in this case corresponds to the PA size, depending on the resources at disposal. The bigger the matrix size is, the more security we have because by increasing the matrix size, one reduces the effect of finite key analysis, which means the compression ratio of the Privacy amplification can be bigger.

On the other hand, a bigger matrix size means more detection accumulation time before being able to generate the first quantum keys for the user, which means increased latency.

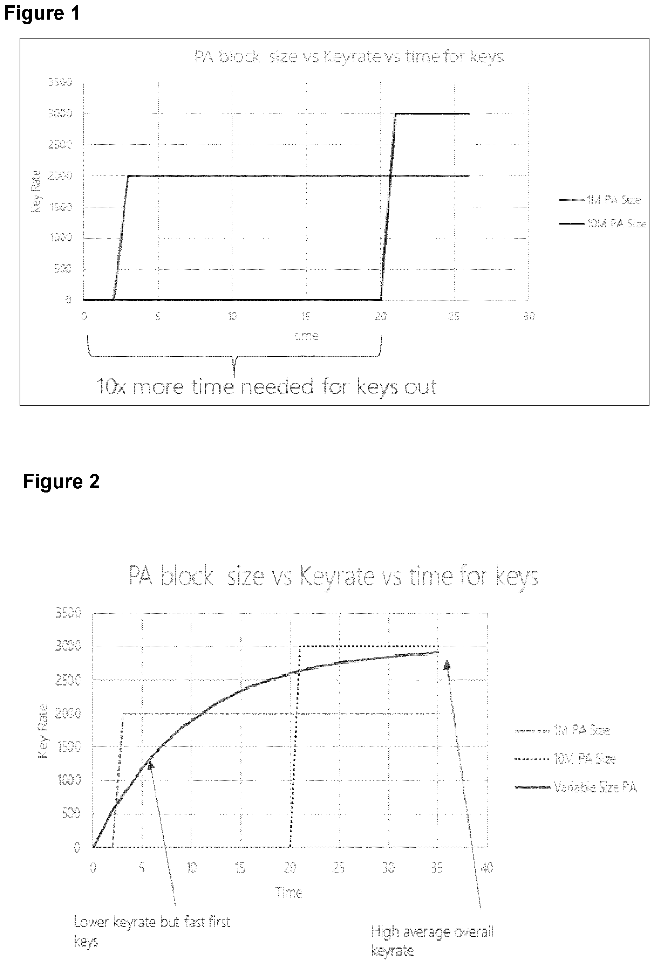

This is represented in figure 1, which is a diagram representing the relation between the PA size, i.e., the size of the matrix, the keyrate and the time for generating the first keys, we can see that with a matrix size of 10M, the privacy amplification processing latency is quite high such that time for generating the first keys is around 20 minutes. This is clearly too long. On the other hand, with a matrix size of 1M, the privacy amplification processing latency is drastically reduced such that time for generating the first keys at a keyrate of 2000 is around 2 minutes.

All prior art publications are about how to implement faster PA post processing algorithms. Faster means the input block can be increased, thus the maximum Secret Key Rate for a given attenuation can be increased. But they never disclose about the impact on a commercial product for the time it takes to get this bigger input block.

Again, all the graphs used in prior art are correlating throughput vs attenuation, but never about time. 128Mb PA size at 10k detections/second for example, would take 12800 seconds to accumulate, that's 213 minutes, or 3.5 hours. That means, one needs to let the QKD run for 3.5 hours before getting any keys out of it. At high detections count (with SNSPDs or short range) it's less of a problem, but long distance QKD with low keyrate becomes a product problem.

There is therefore a need for a device and a method permitting to increase the security of the quantum keys generated and thus, the keyrate, without impacting the initial latency of the first quantum keys for the user.

Therefore, there is a need for a device and a method permitting to provide to the user quantum keys faster while maintaining a good security.

### Summary of the invention

The invention is on the use of different input blocks for a same attenuation as opposed of a different input block for each attenuation to speed up the time needed for a device to create quantum keys, while still keeping the highest keyrate on the long run.

The invention is based on the general approach of variable privacy amplification with a lower PA size when the system starts and increasing its size with time. This will not only give the user quantum keys faster but will also provide a higher keyrate on average because the security will be improved. The prior art usually only looks at one specific PA size for the entire system, and never looks into the issue of waiting a long time for the first keys.

The principle is to lower the privacy amplification size on purpose at the start and ramping up the privacy amplification size until the maximum desired one. This means the key rate at the start will be lower (because lower security), but keys will be available to the user faster, and as time goes on, the PA size can increase, to increase the overall keyrate.

During communication, settings may change, and as time progress, the privacy amplification blocks become larger, which means the maximum keyrate is also increasing.

A first aspect of the invention is a QKD communication method between an emitter and a receiver comprising the steps of distilling a secret key through a Privacy Amplification characterized in that the PA size is variable so as to ramp up from a first lower value at start to an end greater value.

Preferably, when the PA size reaches the end greater value, it remains constant.

Advantageously, the Privacy Amplification uses a Toeplitz matrix and the matrix size is variable.

Alternatively, the Privacy Amplification uses a Fast Fourier Transformation and the PA size is variable.

According to a preferred embodiment of the present invention, the first lower value ranges from 0.4M to 0.7M.

Preferably, the end greater value ranges from 1M to 50M.

A second aspect of the invention is a QKD communication setup adapted to carry out the QKD communication method according to the first aspect of the invention.

### Brief description of the drawings

The invention will be described with reference to the drawings, in which the same reference numerals indicate the same feature. In particular,
- Figure 1 shows a diagram representing the relation between the PA size, the keyrate and the time for generating the first keys,
- Figure 2 shows a diagram representing the relation between the P size, the keyrate and the time for generating the first keys in which the principle of the variable size PA of the present invention is represented,
- Figure 3 shows a diagram representing the typical gain on keyrate for a BB84 system depending on the PA size. Here, dB is the unity decibels, used in attenuation. The higher the attenuation, usually the longer the fibre, so the longer QKD range.

### Detailed Description

The invention will be described, for better understanding, with reference to specific embodiments. It will however be understood that the invention is not limited to the embodiments herein described but is rather defined by the claims and encompasses all embodiments which are within the scope of the claims.

As explained above bigger PA size means more detection accumulation time before being able to generate the first quantum keys for the user, which means increased latency. With reference to the Toeplitz method, this is explained because it's a matrix multiplication. Toeplitz matrix * Vector of Detections. By increasing the PA, i.e., the matrix size, the vector of detections also needs to be increased. Therefore, it takes longer to accumulate them. By starting with a smaller PA size, the initial latency for the first key will be lowered, compared to having a bigger PA size.

The invention is shown in figure 2 which shows a diagram representing the relation between the PA size, the keyrate and the time for generating the first keys as in Figure 1 but in which the principle of the variable size PA of the present invention is represented.

The principle is to start with a lowered privacy amplification size on purpose and ramping up the PA size until the maximum desired one, typically from 1M to 50M.

The lowered privacy amplification size depends on the system protocol and its range. While keeping in mind that the privacy amplification can be done by different algorithms with their specific input size, an example of lowered privacy amplification size is typically 0.5M for a Toeplitz matrix PA.

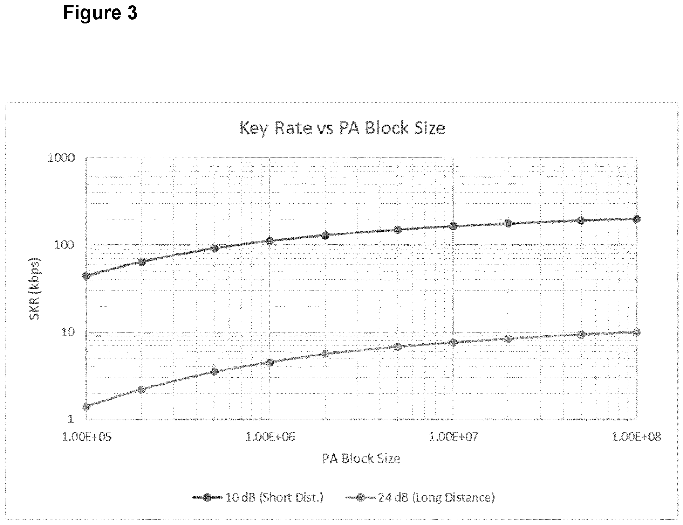

This means that the keyrate at the start will be lower (because lower security) based on the security proof for specific range and protocol as illustrated in Figure 3, but the keys will be available to the user faster, and as time goes on, the PA size can increase, to increase the overall keyrate.

According to the present invention, disclosed is a QKD communication method between an emitter and a receiver comprising the steps of distilling a secret key through a Privacy Amplification characterized in that the PA size is variable so as to ramp up from a first lower value to an end greater value remaining constant when the PA size reaches the end greater value.

The Privacy amplification size may start with 0.5M, then increase it to 1M, 2M, to 4M. Preferably, the first lower value ranges from 0.4M to 0.7M and the end greater value ranges from 1M to 50M.

Finally, Figure 3 shows the typical gain on keyrate for a BB84 system depending on the PA Size. For 24dB, corresponding to 100 km distance QKD system, going from 1M to 10M PA size increase the keyrate by 70%. This is usually seen on the prior art. However, translating into a product standpoint, it would mean waiting 10x more before the first keys are out, like shown on Figure 1.

While the embodiments have been described in conjunction with a number of embodiments, it is evident that many alternatives, modifications and variations would be or are apparent to those of ordinary skill in the applicable arts. Accordingly, this disclosure is intended to embrace all such alternatives, modifications, equivalents and variations that are within the scope of this disclosure. This is, for example, particularly the case regarding the possible sizes of the privacy amplification.

## Claims

1. QKD communication method between an emitter and a receiver comprising the steps of distilling a secret key through a Privacy Amplification **characterized in that** the Privacy Amplification size is variable so as to ramp up from a first lower value at start to an end greater value.

2. QKD communication method according to claim 1, **characterized in that** when the Privacy Amplification size reaches the end greater value, it remains constant.

3. QKD communication method according to any one of claims 1 to 2, **characterized in that** the Privacy Amplification uses a Toeplitz matrix and the matrix size is variable.

4. QKD communication method according to any one of claims 1 to 2, **characterized in that** the Privacy Amplification uses a Fast Fourier Transformation and the PA size is variable.

5. QKD communication method according to any one of claims 1 to 4, **characterized in that** the first lower value ranges from 0.4M to 0.7M.

6. QKD communication method according to any one of claims 1 to 5, **characterized in that** the end greater value ranges from 1M to 50M

7. QKD communication setup comprising adapted to carry out the QKD communication method according to any one of claims 1 to 6.
